# EUROPÄISCHE PATENTANMELDUNG

(11) **EP 2 587 815 A1**
(43) Veröffentlichungstag der Anmeldung: **01.05.2013**
(21) Anmeldenummer: 11405349.9
(22) Anmeldetag: 27.10.2011
(51) Int. Cl.: H04N 13/04

(54) **HD 3D SMART-TV mit integrierter 3D-Projektor**

(71) Anmelder: Isim, Yilmaz Dersim, 4302 Augst (CH)
(72) Erfinder: Isim, Yilmaz Dersim, 4302 Augst (CH)

(57) **Zusammenfassung**

HD 3D SMART-TV mit integrierter 3D-Projektor,ist dadurch gekennzeichnet, dass im oberen Gehäuserahmen des HD 3D SMART-TV ein integrierte 3D-Projektor installiert ist.

Das integrierte 3D-Projektor, ist um seine eigene Achse schwenkbar, so das man das Projektierte 3D-Raumbild manuell oder automatisch variabel ausrichten kann,siehe Zeichnung Nr.1 Punkt 1.

## Beschreibung

Die Beschreibung ergänzt folgende Erfindung, die dadurch gekennzeichnet ist,dass im oberen Gehäuserahmen des HD 3D SMART-TV ein integrierte 3D-Projektor installiert ist.

Das installierte 3D-Projektionssystem dient für das projizieren von 3D-Raumbild was direkt vom HD 3D SMART-TV ausgetragen wird.

3D-TV ist die Abkürzung für 3D-Television und damit für eine Fernsehübertragung von Videosignalen getrennt für das linke und rechte Auge, so dass wie im realen Leben der Eindruck von räumlicher Tiefe entsteht.

Das Videosignal wurde dafür bereits getrennt im Stereoskopie-Verfahren aufgenommen und kann auf mehrere Arten im Fernsehsignal zum Zuschauer nach Hause eingebettet werden. Bereits mit dem Aufkommen vom Farbfernsehen wurden stereoskope Inhalte anaglyph gesendet. Dazu wird das Videosignal für das eine Auge vom roten Farbanteil und für das andere Auge vom blauen Farbanteil befreit und wieder übereinander gelegt. Zum Betrachten werden dann rot-blaue 3D-Brillen benötigt, aber auch andere Farbkombinationen lassen sich dafür einsetzen.

Anfang 2010 brachten mehrere Unternehmen Fernsehgeräte auf den Markt, mit denen man zu Hause 3D-Filme anschauen kann. Hierfür wird eine LCD-Shutterbrille benötigt.

Ebenfalls auf der IFA 2010 zeigten mehrere Hersteller 3D-Bildschirme, für die keine speziellen Brillen notwendig sind, sogenannte autostereoskopische Displays. Dazu ist der Schirm - wie bei Wackelbildern - mit senkrechten Streifen von Mikroprismen versehen, so dass die beiden Augen verschiedene Bilder erreichen. Einige Anbieter können jedoch nicht nur eine Sichtachse, sondern mehrere bedienen. Auf der Fachmesse CES in Las Vegas im Januar 2011 haben drei Unternehmen kommerziell verfügbare, autostereoskopische 3D-Bildschirme präsentiert. Einige dieser präsentierten Geräte konnten bis zu sieben Sichtachsen gleichzeitig mit 3D-Bildern "bedienen". Die ersten kommerziellen Einsätze liegen insbesondere im Bereich von Außenwerbung, d. h. Digital Signage, Gaming sowie anspruchsvolle PC-Anwendungen wie CAD. Laut einer BITKOM-Studie sollen bis zum Jahr 2015 in Deutschland rund acht Millionen Fernseher mit 3D-Technologie Absatz finden.

Im Zuge der fortschreitenden Digitalisierung der Technik wachsen Fernsehempfänger immer mehr in Richtung voll funktionsfähiger All-in-one-Computer.

Viele Fernsehgeräte bringen Schnittstellen wie USB, Steckplätze für Speicherkarten oder Heimnetzwerk-Anschlüsse bzw. WLAN-Antennen mit, damit sie Mediendateien wie Bilder und Videos wiedergeben können.

Über WLAN wird auch oft eine Internet-Anbindung realisiert, die es erlaubt, beliebige Internetseiten mit einem integrierten Webbrowser aufzurufen oder verschiedene vom Fernsehgeräteanbieter zur Verfügung gestellte TV-Apps und Widgets zu nutzen. Solche Fernsehgeräte, die zusehends interaktiver gestaltet und mit Internet-Funktionen ausgestattet sind, werden häufig unter dem Begriff Smart-TV geführt.

Von der Seite der Personal Computer her gibt es immer mehr Geräte, die in der All-in-one-Bauweise vom Design her "wohnzimmertauglich" gemacht wurden und die auf diese Weise das komplette Funktionsspektrum eines PCs anbieten. Es gibt einen deutlichen Trend zur Konvergenz der Technik von Fernsehempfängern und Personal Computern.

Ein **3D-Projektor** ist ein optischer Projektor zur Raumbildprojektion. Anwendungen hierfür sind beispielsweise 3D-Kinos, Planungssysteme für technische Anlagen, Design. Simulationen oder Produktpräsentationen.Ein passives 3D-Projektionssystem ist ein Doppelprojektionssystem, welches zwei stereoskopische Halbbilder deckungsgleich aufeinander justiert projizieren kann. Um eine Kanaltrennung vorzunehmen, wird vor jedem Projektor ein Filter - beispielsweise ein Polarisationsfilter - angebracht.Das bedeutet, dass die Bilder für das linke und das rechte Auge des Betrachters abwechselnd projiziert werden. Eine Shutterbrille sorgt beim Betrachter dafür, dass jedes Auge nur jeweils eines der beiden Bilder zu sehen bekommt. Dadurch entsteht der stereoskopische Eindruck. Hierzu ist die Synchronisation von dargebotenem Bild und dem *freien Blick* für das jeweils *richtige* Auge notwendig. Beispiel für eine entsprechende Steuerung ist das DLP-Link-Verfahren.Wenn man die Projektionsfläche bewegt, überstreicht sie ein ganzes Volumen. Wenn dies schnell genug geschieht und je nach Position der Fläche andere Inhalte projiziert werden, fasst das menschliche Auge auf Grund seiner Trägheit alles insgesamt zu einem geschlossenen 3D-Bild zusammen.

**Raumbildprojektion** (auch Stereoprojektion genannt) bezeichnet die stereoskopische Vorführung von 3D-Bildern oder 3D-Filmen durch dafür geeignete Projektoren. Sie kann als Auf- oder Frontprojektion oder als Rückprojektion erfolgen. Eine Raumbildprojektion erfordert höheren technischen Aufwand als eine herkömmliche Projektion mit einem Projektor und einer weißen Leinwand.

Die Bilder für linkes und rechtes Auge Teilbilder genannt) werden gleichzeitig oder quasi gleichzeitig projiziert. Deshalb muss das Projektionssystem für die ersten beiden beschriebenen Techniken aus mindestens zwei konventionellen Projektoren oder einem Projektor mit zwei Objektiven bestehen. Die Unterschiede der nachfolgend beschriebenen Projektionstechniken beziehen sich im wesentlichen auf die bei jeder stereoskopischen Betrachtungsmethode nötigen Trennung von linkem und rechtem Bild (Kanaltrennung).Für einen 3D-Film müssen zwei Bilder von leicht unterschiedlichen Perspektiven aufgenommen werden - entweder mit einer Stereokamera mit zwei Objektiven oder mit zwei getrennten Kameras. Bei der Projektion mit der Polfiltertechnologie müssen diese Filmbilder auf der Silberleinwand übereinander projiziert, aber jedem Auge getrennt zugeführt werden, sonst kann das Gehirn keinen räumlichen Eindruck feststellen.In der Anfangszeit des 3D-Films wurden die Filmbilder auf zwei getrennten Filmstreifen mit zwei mechanisch gekoppelten Projektoren projiziert. Dabei kam es öfter vor, dass ein Filmstreifen riss und die Filmvorführung nur noch "flach" fortgesetzt werden konnte, weil eine Synchronisation der beiden Filmstreifen kaum noch möglich war. Abhilfe gab es für dieses Problem erst, als es gelang, beide Filmbilder auf einem Filmstreifen unterzubringen.

## Patentansprüche

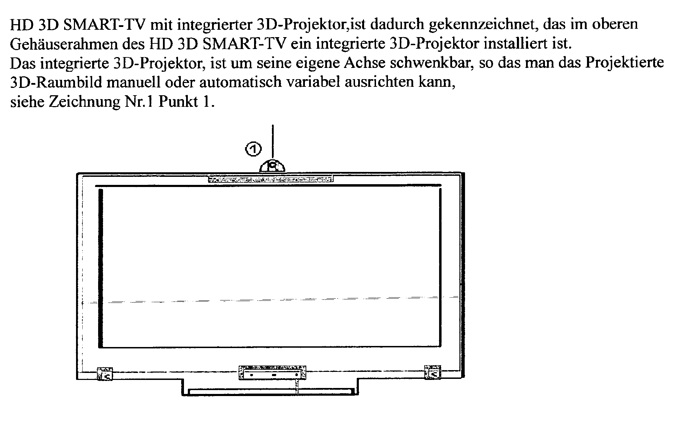

1. HD 3D SMART-TV ist die Abkürzung für 3D-Television und damit für eine Fernsehübertragung von Videosignalen getrennt für das linke und rechte Auge, so dass wie im realen Leben der Eindruck von räumlicher Tiefe entsteht.Das Videosignal wurde dafür bereits getrennt im Stereoskopie-Verfahren aufgenommen und kann auf mehrere Arten im Fernsehsignal zum Zuschauer nach Hause eingebettet werden mit denen man 3D-Filme anschauen kann.Einige dieser HD 3D SMART-TV können bis zu sieben Sichtachsen gleichzeitig mit 3D-Bildern "bedienen".mehr in Richtung voll funktionsfähiger All-in-one-Computer.
Viele HD 3D SMART-TV bringen Schnittstellen wie USB, Steckplätze für Speicherkarten oder
Heimnetzwerk-Anschlüsse bzw. WLAN-Antennen mit, damit sie Mediendateien wie Bilder und Videos wiedergeben können.
Über WLAN wird auch oft eine Internet-Anbindung realisiert, die es erlaubt, beliebige Internetseiten mit einem integrierten Webbrowser aufzurufen oder verschiedene vom Fernsehgeräteanbieter zur Verfügung gestellte TV-Apps und Widgets zu nutzen. Solche Fernsehgeräte, die zusehends interaktiver gestaltet und mit Internet-Funktionen ausgestattet sind, werden häufig unter dem Begriff Smart-TV geführt,siehe Zeichnung Nr.1 Punkt 1,
**dadurch gekennzeichnet ist,**
a) **dass** im oberen Gehäuserahmen des HD 3D SMART-TV ein integrierte 3D-Projektor installiert ist,
b) **dass** das integrierte 3D-Projektor um seine eigene Achse schwenkbar ist, so das man das Projektierte 3D-Raumbild manuell oder automatisch variabel ausrichten kann.
